# EUROPÄISCHE PATENTSCHRIFT

(11) **EP 2 466 604 B1**
(45) Veröffentlichungstag und Bekanntmachung des Hinweises auf die Patenterteilung: **11.09.2013**
(21) Anmeldenummer: 11191860.3
(22) Anmeldetag: 05.12.2011
(51) Int. Cl.: H01H 33/36, H01H 33/42

(54) **Antriebseinheit zum Betreiben eines Schalters einer Mittel- oder Hochspannungsschaltanlage**
Drive unit for operating a switch of a medium or high voltage switching system
Unité d'entraînement pour le fonctionnement d'un interrupteur d'une installation de commutation à moyenne ou haute tension

(30) Priorität: 15.12.2010 DE 102010063131
(43) Veröffentlichungstag der Anmeldung: 20.06.2012
(73) Patentinhaber: ABB Technology AG, 8050 Zürich (CH)
(72) Erfinder: Erford, Tobias, 8050 Zürich (CH); Sabani, Arben, 8046 Zürich (CH); Sologuren-Sanchez, Diego, CH-5430 Wettingen (CH); Holaus, Walter, 8047 Zürich (CH)
(74) Vertreter: ABB Patent Attorneys

(56) Entgegenhaltungen:
- WO-A1-2009/074856
- DE-A1-102008 059 163

## Beschreibung

### TECHNISCHES GEBIET

Die vorliegende Erfindung betrifft eine Antriebseinheit zum Betreiben eines Schalters einer Mittel- oder Hochspannungsschaltanlage sowie eine Schaltanlage mit einer solchen Antriebseinheit, insbesondere einer gasisolierten Schaltanlage.

### TECHNOLOGISCHER HINTERGRUND UND STAND DER TECHNIK

Aus dem Stand der Technik sind vielerlei elektrische Schalter mit beweglichen Schaltelementen bekannt, welches über eine Antriebseinheit mit einem Schalterantrieb/Elektromotor von einer ersten Position bzw. Schaltstellung ein eine zweite Position bzw. Schaltstellung bewegbar ist. Stellvertretend sind an dieser Stelle die EP1068624B1 oder die EP1569254A1 für eine Vielzahl von gasisolierten Schalter genannt.

Solche Schalter weisen typischerweise ein metallisches Gehäuse auf, an welchem die zum Bewegen des Schaltelementes erforderliche Antriebseinheit mitsamt Schalterantrieb befestigt ist.

Unter Schalter werden nachfolgend Hilfsschalter wie etwa Arbeitserdschalter, Trennschalter oder einschaltfeste Erdschalter und dergleichen verstanden, nicht jedoch Leistungsschalter wie gasisolierte Leistungsschalter mit einer Lichtbogenlöschvorrichtung und dergleichen.

Wird nun beispielsweise eine gasisolierte Unterstation mit mehreren solchen Schaltern gebildet, dann weist die Unterstation rasch einmal stattliche Dimensionen von mehreren Metern auf, wobei die Schalter an verschiedenen Positionen - sprich geometrischen Orten - in der Unterstation angebracht sind. Je nach Anforderungen sind die Schalter zudem noch unterschiedlich zueinander ausgerichtet.

Wenn im Fall einer Funktionsstörung der Antriebseinheit und/oder des Elektromotors oder für Wartungszwecke eine visuelle Kontrolle der Antriebseinheit erforderlich ist, so muss ein Techniker zum Schalter gelangen, um anschliessend dessen Antriebseinheit einsehen zu können. Wenn er feststellt, dass die Antriebseinheit und/oder der Elektromotor fehlerhaft sind oder einer Wartung zugeführt werden müssen, so wird die Antriebseinheit typischerweise durch einen Techniker ausgetauscht, wobei der Schalter selber nach Möglichkeit in der Unterstation eingebaut bleibt. Je nach Grösse der Unterstation kann insbesondere Letzteres mit einem erheblichen Aufwand verbunden sein.

Das Dokument WO 2009/074856 offenbart eine Antriebseinheit gemäss dem Oberbegriff des Anspruchs 1.

### ZUSAMMENFASSUNG DER ERFINDUNG

Es ist daher eine Aufgabe der vorliegenden Erfindung, eine Antriebseinheit zum Betreiben eines Schalters einer Mittel- oder Hochspannungsschaltanlage sowie eine gasisolierte Schaltanlage mit einer solchen Antriebseinheit vorzulegen, welche eine bedienerfreundlichere und erleichterte Zugänglichkeit im eingebauten Zustand sowie eine erleichterte Austauschbarkeit der Antriebseinheit eines Schalters im Vergleich zu bekannten Schaltern ermöglicht.

Dieses Ziel wird durch eine Antriebseinheit gemäss Anspruch 1 sowie durch eine Schaltanlage gemäss Anspruch 10 gelöst.

Hinsichtlich der Antriebseinheit wird diese Aufgabe dadurch gelöst, dass die Antriebseinheit, welche mit mindestens einem Schalter einer Mittel- oder Hochspannungsschaltanlage zum Überführen mindestens eines Schaltelementes des mindestens einen Schalters von einer ersten Position in eine zweite Position verbindbar ist, in einer Basisausführung einen Elektromotor sowie eine elektrische Schnittstelle zur Leistungsversorgung und zur Steuerung des Elektromotors aufweist. Unter dem Begriff Überführen des beweglichen Schaltelements eines Schalters von einer ersten Position in eine zweite Position wird ein Bewegen, beispielsweise in Form eines linearen Verschiebens oder eines Drehens verstanden.

Die Antriebseinheit weist ein erstes Führungselement auf, während ein Schalterantrieb der Antriebseinheit den elektrischen Motor und die elektrische Schnittstelle sowie ein zweites Führungselement aufweist. Der Schalterantrieb wirkt über das zweite Führungselement derart mit dem ersten Führungselement dadurch zusammen, dass der Schalterantrieb in die Antriebseinheit hineinsteckbar und aus der Antriebseinheit herausziehbar ist.

Zudem weist der Schalterantrieb eine mechanische Kupplung zur Abgabe einer über den Elektromotor erzeugbaren Antriebskraft an einen räumlich von der Antriebseinheit entfernt anordenbaren Schalter auf.

Dadurch, dass die Antriebseinheit räumlich vom Schalter entfernt anordenbar ist, sind beispielsweise Anlagen herstellbar, bei welchen die eigentlichen Schalter einer Unterstation, beispielsweise einer gasisolierten Schaltanlage, an ihren möglichst optimalen Positionen in der Schaltanlage verbleiben kann, während deren Antriebseinheit zum Bewegen des im Schalter angeordneten Schaltelement an einem bedienerfreundlicheren, einfacher zugänglichen Ort angeordnet ist. So ist es je nach Bedarf beispielsweise möglich, die Antriebseinheit direkt am Bediengang einer Schaltanlage anzuordnen, wodurch sich eine ideale Zugänglichkeit im eingebauten Zustand erreichen lässt. In bekannten Anlagen werden bereits seit längerem Steuer- oder Überwachungsarbeiten vom Bediengang her ausgeführt, beispielsweise an einem Steuerschrank.

Die Kraftübertragung des Schalterantrieb der Antriebseinheit auf das zu bewegende Schaltelement des räumlich je nach Ausführungsform mehrere Meter entfernt angeordnete Schaltelement eines Schalters erfolgt beispielsweise über eine hydraulische Leitung oder eine mechanische Welle.

Wenn die Kraftübertragung hydraulisch erfolgt, handelt es sich bei der Antriebseinheit entsprechend um eine hydraulische Antriebseinheit, welche beispielsweise eine Pumpe zum Verfrachten von Hydrauliköl umfasst. Wenn die Kraftübertragung hingegen mechanisch erfolgt, so ist dies beispielsweise über eine mechanische Verbindung in Form einer mechanischen Welle oder eines Getriebes möglich, welches die Antriebseinheit mit dem zu bewegenden Schaltelement verbindet. Wenn die mechanische Kraftübertragung über eine biegsame Welle - auch flexible Welle genannt - erfolgt, sind zusätzliche Vorteile bezüglich der Aufnahme von Montagetoleranzen sowie der vielseitigeren Einbaulage von Schaltern erzielbar, welche an verhältnismässig schwer zugänglichen Orten in der Schaltanlage angeordnet sind. Je nach Ausführungsform der Antriebseinheit weist diese im Fall der mechanischen Kraftübertragung beispielsweise einen Elektromotor als eigentliches Antriebsmittel auf.

Der in die Antriebseinheit hineinsteckbare und aus der Antriebseinheit herausziehbare Schalterantrieb erlaubt einem Techniker in kürzester Zeit, eine erfindungsgemässe defekte Antriebseinheit gegen eine erfindungsgemässe funktionsfähige Antriebseinheit auszutauschen. Im Vergleich dazu musste ein Techniker in bekannten Anlagen zuerst zum irgendwo in der Schaltanlage angeordneten Schaltereinheit gelangen, bevor er die am Gehäuse befestigte oder gar in das Gehäuse des Schalters integrierte Antriebseinheit mit Schalterantrieb einsehen und bei Bedarf austauschen konnte. Befindet sich der Schalterantrieb beispielsweise nun beim Bediengang, so kann ein Techniker ohne den Bediengang verlassen zu müssen und in kürzester Zeit zur Antriebseinheit und damit zum Schalterantrieb zu gelangen.

Die mechanische Kupplung begünstigt die Austauschbarkeit der Austauschbarkeit weiter, indem sie eine Schnittstelle zum Kraftübertragungsmittel bildet, beispielsweise der mechanischen Welle. Je nach Ausgestaltung der Kupplung erlaubt diese ein Einkuppeln beziehungsweise Entkuppeln vom Kraftübertragungsmittel, ohne dass dazu eine separate Manipulation seitens des Technikers erforderlich ist. Anders formuliert kann die Kupplung je nach Ausführungsform erheblich zur erleichterten Austauschbarkeit der Antriebseinheit beitragen. Als Beispiel einer Vielzahl von Kupplungen sei an dieser Stelle eine Kupplung mit einer Formpassung erwähnt, wobei die mechanische Welle beispielsweise einen Kupplungsabschnitt mit einer Aufnahmeöffnung mit einem sechskantförmigen Innenraumquerschnitt aufweist, während der Schalterantrieb zur Kraftabgabe einen entsprechend geformten Kupplungsabschnitt mit einem sechskantförmigen Bolzenabschnitt aufweist.

Unter dem Begriff "Betreiben der Schaltanlage" wird nachfolgend unter anderem ein Steuern, Regeln, Messen, Überwachen, Versorgen des Schalters mit Leistung et cetera verstanden. Entsprechend sind die dazu erforderlichen Mittel beispielsweise Leistungstransformatoren, Einheiten zum Auswerten von Sensorikdaten, Gasdichtewächter, Temperaturfühler, Einheiten zum Auswerten von Endlagendaten vom Schalter, Einheiten zum Auswerten von Positionsdaten des Schaltelementes im Schalter und dergleichen.

Aus all diesen Gründen eignet sich ein derartiger Antrieb vorzüglich zum Bewegen eines Schaltelements eines Schalters einer gasisolierten Schaltanlage.

Wenn das erste Führungselement und/oder das zweite Führungselement eine Führungsachse definieren, in deren Richtung der Schalterantrieb in die Antriebseinheit hineinsteckbar und aus der Antriebseinheit herausziehbar ist, lässt sich eine besonders einfache Geometrie der Antriebseinheit realisieren. Je nach Ausgestaltung der Führungselemente lässt sich die Antriebseinheit beispielsweise durch ein lineares Einschieben zweier gegenteilig geformter Führungen erreichen. Um die Reibung zwischen den Führungsprofilen zu vermindern, können diese bei Bedarf entsprechend beschichtet sein, etwa mit Polytetrafluorethylen, oder selber aus einer Materialpaarung mit einem geringen Gleitwiderstand, etwa Nylon - Metall beschaffen sein oder diese umfassen. Alternativ sind auch Ausführungsformen möglich, welche einen Rollenmechanismus ähnlich demjenigen einer modernen Schublade aufweist.

Um die Verwechslungsgefahr unterschiedlich konfigurierter Schalterantriebe mit ähnlichem Aussehen auszuschliessen, kann ein geeignetes Kodierungsmittel eingesetzt werden. Dieses Kodierungsmittel kann Bestandteil der Führungen sein oder unabhängig von den Führungen sein. Im ersteren Fall kann eine Kodierung etwa über die Dimensionierung der Führungen erzielt werden. In letzterem Fall ist eine Kodierung etwa mit einer Pin-Buchsen-artigen Verriegelung erzielbar, welche je nach Pin und/oder Buchsenanordnung ein vollständiges Einstecken eines "falschen" Schalterantriebes in die Schalterantriebaufnahme verhindert.

Je nach Ausführungsform der Antriebseinheit ist deren zweites Führungselement mit einem Grundkörper des Schalterantriebs verbunden. Die Verbindung kann beispielsweise dadurch erreicht werden, dass ein Nylonstreifen auf den Grundkörper aufgenietet ist.

Wenn ein Betreiber der Schaltanlage und der Antriebseinheit fordert, dass das Schaltelement des Schalters selbst bei Stromausfall zuverlässig von der ersten Position in die zweite Position überführbar ist, so kann eine Ausführungsform des Schalterantriebes mechanische Bedienmittel aufweisen, über welche Bedienmittel der Schalterantrieb in einem in die Antriebseinheit eingesteckten Zustand alternativ von Hand betreibbar ist. Stellvertretende Beispiele einer Vielzahl von möglichen Bedienmittel sind etwa ein mit einem Getriebe verbundenes Wellenende mit einem Aussenmehrkant zum Ansetzen eines Gabelschlüssels oder Steckschlüssels oder ein Handkurbelantrieb. In letzterem Fall ist die Handkurbel aus Sicherheitsgründen für den Normalbetriebsfall vom Schalterantrieb entfernbar. Die Anordnung eines alternativen Handantriebs ist insbesondere dann vorteilhaft, wenn die Antriebseinheit mit dem Schalterantrieb bediengangseitig ergonomisch möglichst ideal für einen Betreiber/Techniker zugänglich ist.

Um einem Betreiber/Techniker ein Ablesen der Schaltstellung des vom Schalterantrieb angetriebenen Schaltelementes des Schalters besonders bedienerfreundlich zu gestalten, sind Ausführungsformen der Antriebseinheit realisierbar, bei welchen der Schalterantrieb mit einer in der Antriebseinheit oder im Schaltschrank angeordneten Schaltstellungsanzeige verbunden ist. Überdies sind auch Ausführungsformen realisierbar, bei welchen der Schalterantrieb selber eine Schaltstellungsanzeige aufweist, mit welcher im Betrieb der Antriebseinheit beziehungsweise der Schaltanlage eine Schaltstellung des Schaltelementes darstellbar ist.

Geometrisch besonders einfache Antriebseinheiten lassen sich realisieren wenn das zweite Führungselement zumindest teilweise in den Grundkörper integriert ist. Je nach Ausführungsform ist dies etwa dann der Fall, wenn der Grundkörper aus Blech gefertigt ist, welches entweder flach oder gebogen ist. Durch ein Umbiegen des Bleches sind kostengünstig auch anspruchsvollere Führungen realisierbar, beispielsweise mit einem Z-förmigen, zweiten Führungselement.

Wenn die Austauschbarkeit des Schalterantriebs weiter verbessert werden soll, kann die die elektrische Schnittstelle als elektrische Steckverbindung mit mindestens einem Stecker und einer Steckdose ausgeführt sein. Dabei ist der Stecker oder die Steckdose beispielsweise mit dem Grundkörper verriegelbar. Dies kann etwa durch eine lösbare Verbindung mittels einer Verschraubung mit einer Überwurfmutter oder dergleichen oder einer steckbaren Bajonettverbindung erreicht werden. Als Beispiele für nicht zerstörungsfrei lösbare Verbindung seien an dieser Stelle eine Klippverbindung oder eine Klebverbindung genannt.

Im Fall eines als schubladenartiger Einschub konzipierten Schalterantriebs ist die Zugänglichkeit zur Steckverbindung weiter verbesserbar, wenn die Steckverbindung eine Steckachse definiert, welche sich quer zur Führungsachse erstreckt, insbesondere rechtwinklig zur Führungsachse 21 erstreckt.

Alternativ dazu ist ein ebenfalls as schubladenartiger Einschub konzipierten Schalterantrieb realisierbar, bei welchem die Steckverbindung eine Steckachse definiert, welche sich derart in Richtung der Führungsachse erstreckt, dass sich beim Hineinstecken des Schalterantriebs in die Antriebseinheit selbsttätig eine elektrische Steckverbindung zwischen Stecker und Steckdose einstellt. Diese Ausführungsform ist insofern vorteilhaft, als dass sich beim korrekten Hineinstecken des Schalterantriebs in die erste Führung selbsttätig eine fehlerfrei elektrische Kontaktierung bewerkstelligen lässt. Eine derartige Ausführungsform ist zudem narrensicher. Wenn die zum Kontaktieren erforderlichen Kontaktkräfte einen Schwellwert übersteigen sollten, kann durch die Anordnung einer Kontaktierhilfe ein verlässliches Aufbringen der erforderlichen Kraft sichergestellt werden. Eine derartige Kontaktierhilfe kann beispielsweise eine in Richtung der Führungsachse wirkende Schraubenverbindung zwischen dem Schalterantrieb und der Antriebseinheit mit dem ersten Führungselement sein. Eine alternative Kontaktierhilfe ist durch eine in Richtung der Führungsachse wirkende Schraubenverbindung zwischen dem Schalterantrieb und der Antriebseinheit wirkende Kniehebelspanneinrichtung erzielbar. Zum Erhöhen der Präzision beim Hineinstecken des Schalterantriebs in die Antriebseinheit kann mindestens ein Zentrierelement, beispielsweise ein Zentrierdorn vorgesehen werden.

Bei Bedarf umfasst der Schalterantrieb auch Hilfskontakte zur Erfassung einer Schalterstellung des antreibbaren Schalters. Je nach Ausführungsform erfolgt diese Erfassung einer Schalterstellung über eine Positionserfassung der Motorwelle oder eines Zwischengetriebes, beispielsweise über eine Drehwinkelerfassung. Durch diese Integration der Hilfskontakte kann im Vergleich zu bekannten Antriebseinheiten beispielsweise eine Steckerleiste entfallen.

Um ein zuverlässiges Verbleiben des Schalterantriebs in der erfindungsgemässen Antriebseinheit sicherzustellen, ist der Schalterantrieb im eingesteckten Zustand mit der Antriebseinheit mechanisch verbindbar, in Ausführungsformen mechanisch verriegelbar. Je nach Anforderungen kann eine solche Verbindung beispielsweise eine in Richtung der Führungsachse wirkende Schraubenverbindung zwischen dem Schalterantrieb und der Antriebseinheit mit dem ersten Führungselement sein. Bei Bedarf ist der Schalterantrieb in seinem eingesteckten Zustand in der Antriebseinheit versiegelbar, beispielsweise mittels einer Plombe. In einer anderen Ausführungsform kann die Verriegelung gleich mit der oben genannten Kontaktierhilfe kombiniert sichergestellt sein. Je nach Bedarf ist diese Verbindung oder Verriegelung beispielsweise als auf dem Schalterantrieb oder auf der Antriebseinheitsseite angeordneter Kniehebelspanner realisiert sein.

Hinsichtlich der Schaltanlage wird die Aufgabe durch eine erfindungsgemässe, oben beschriebene Ausführungsform der Antriebseinheit gelöst. Bezüglich der sich daraus ergebenden Vorteile für die Schaltanlage wird deshalb an dieser Stelle auf die oben genannten Vorteile des Antriebs verwiesen. Die Antriebseinheit ist mit einem Schalter zum Überführen eines Schaltelementes des Schalters von einer ersten Position in eine zweite Position verbunden, wobei die Antriebseinheit räumlich vom Schalter entfernt angeordnet ist. Unter dem Begriff "räumlich vom Schalter entfernt angeordnet" wird eine Antriebseinheit verstanden, welche nicht auf dem Schalter beziehungsweise dem Schaltergehäuse selber aufgebracht ist, sondern beispielsweise in einem davon mehrere Meter entfernten Schaltschrank der Schaltanlage.

Wenn die Schaltanlage als gasisolierte Schaltanlage mit einer Antriebseinheit gemäss oben genannten Ausführungsformen ausgeführt ist, und der Schalterantrieb eine mechanische Kupplung zur Abgabe eines über den Elektromotor erzeugbaren Drehmomentes über eine mechanische Welle, insbesondere eine flexible Welle, an den Schalter aufweist, ergeben sich weitere Vorteile in punkto des Freiheitsgrades beim Schaltanlagendesign.

Obwohl die oben genannte Erfindung am Beispiel einer gasisolierten Schaltanlage (GIS) erklärt worden ist, ist die Erfindung dementsprechend auch für Dead Tank Breaker (DTB), Live Tank Breaker (LTB) und luftisolierte Schaltanlagen (AIS) entsprechend einsetzbar.

### KURZE BESCHREIBUNG DER ZEICHNUNG

In der Zeichnung sind Ausführungsbeispiele der Erfindung rein schematisch dargestellt. Dabei zeigt:
- Fig. 1: eine Seitenansicht einer gasisolierten Schaltanlage mit einer Antriebseinheit und einem Schalter;
- Fig. 2: eine isolierte, räumliche Darstellung der Antriebseinheit und einer vereinfachten Darstellung des Schalters;
- Fig. 3: eine vereinfachte Schnittansicht der Antriebseinheit mit einer ersten Ausführungsform eines Schalterantriebs in Richtung einer ersten Ebene von Figur 2;
- Fig. 4: eine vereinfachte Schnittansicht der Antriebseinheit mit einer zweiten Ausführungsform eines Schalterantriebs;
- Fig. 5: eine erste Ausführungsform einer Führung in vereinfachter Schnittansicht entlang einer in Fi- gur 5 mit Schnitt V-V gekennzeichneten Ebene; und
- Fig. 6: eine zweite Ausführungsform einer Führung in vereinfachter Schnittansicht in einer Darstellung gemäss Figur 5.

### WEGE ZUR AUSFÜHRUNG DER ERFINDUNG

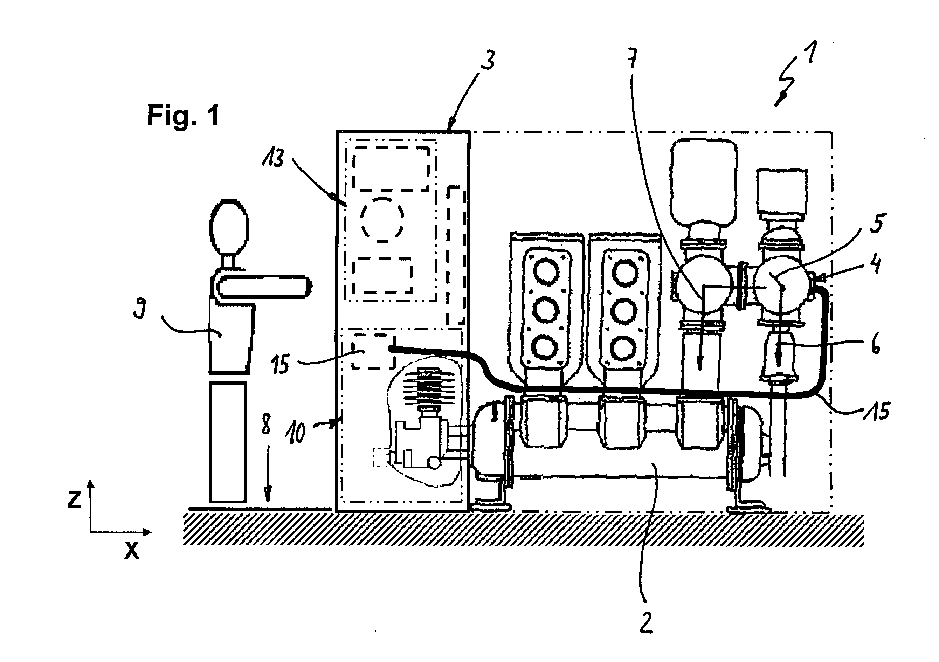

Die in **Figur 1** dargestellte erste Ausführungsform einer erfindungsgemässen gasisolierten Schaltanlage 1 mit einem sich in horizontaler Richtung (X) erstreckenden Leistungsschalter 2 und einem stirnseitig dazu angeordneten kombinierten Antriebs- und Steuerschrank 3. Die Schaltanlage ist innerhalb eines mit einer strichpunktierten Linie angedeuteten Bauraums angeordnet und umfasst mindestens einen gasisolierten Schalter 4 mit mindestens einem beweglichen Schaltelement 5 auf. Je nach Schaltstellung unterbricht oder verbindet das bewegliche Schaltelement 5 einen ersten Leiterabschnitt 6 mit einem zweiten Leiterabschnitt 7 der Schaltanlage 1. Die Leiterabschnitte 6, 7 und das Schalterinnere sind lediglich stilisiert dargestellt.

Links vom Antriebs- und Steuerschrank 3 ist ein sich in Y-Richtung erstreckender Bediengang 8 für einen Bediener oder Techniker 9 angeordnet.

Der Antriebs- und Steuerschrank 3 umfasst eine Steuereinheit 13 zum Steuern und Regeln der Schaltanlage, sowie eine Antriebseinheit 10 (beide strichpunktiert dargestellt). Die Antriebseinheit 10 dient unter anderem zum Überführen des mindestens einen Schaltelementes 5 des mindestens einen Schalters 4 von einer ersten Position in eine zweite Position. Dazu weist die Antriebseinheit 10 einen Schalterantrieb 15 auf, welcher räumlich vom eigentlichen Schalter 4 entfernt nahe beim Bediengang 8 angeordnet ist.

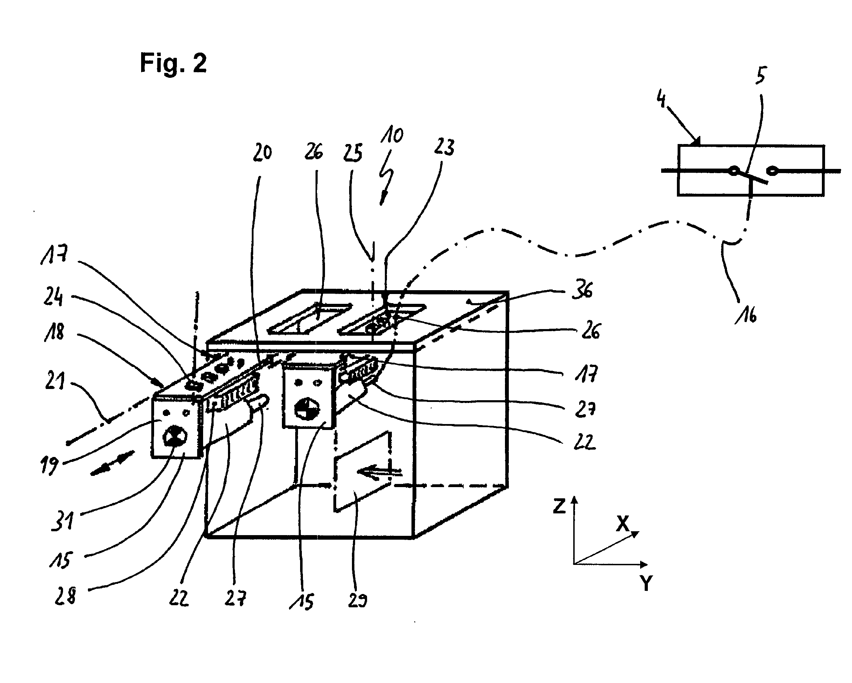

Der Schalterantrieb 15 umfasst einen Elektromotor 22 (siehe beispielsweise Fig. 2 bis 4), dessen Antriebskraft hier über eine biegsame mechanische Welle 16 auf das bewegliche Schaltelement 5 einwirkt.

Um die Erklärung möglichst verständlich zuhalten, wird nachfolgend die Erfindung mit Bezug auf lediglich einen Schalterantrieb 15 und ein bewegliches Schaltelement 5 erklärt. Es versteht sich jedoch von selbst, dass eine Schaltanlage, beispielsweise eine gasisolierte Unterstation eine Vielzahl von Schaltern und entsprechend eine Vielzahl von Schalterantrieben aufweisen kann.

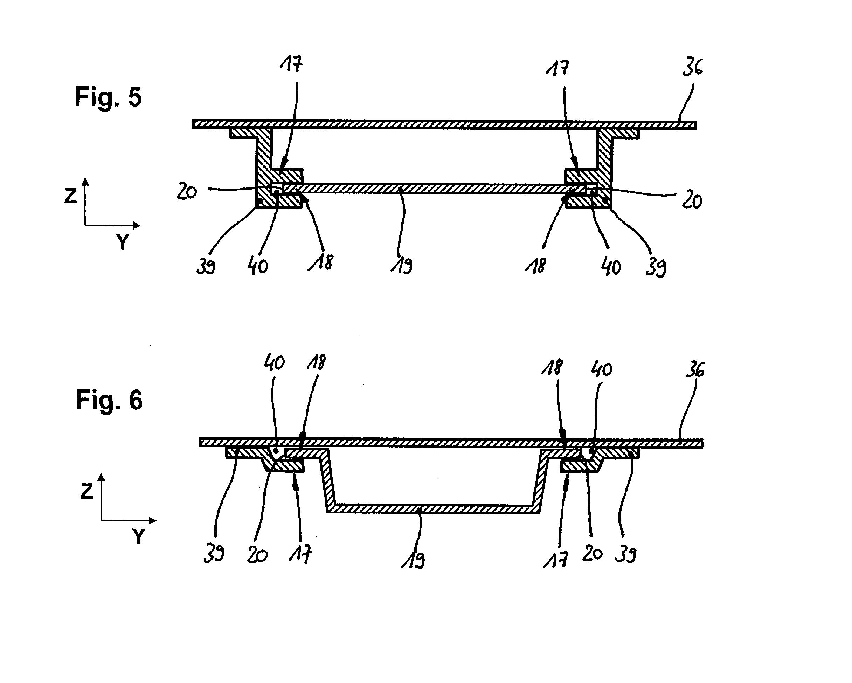

Aus der Zusammenschau mit der vereinfacht dargestellten Ansicht der Antriebseinheit 10 und des Schalters 4 in Figur 2 geht hervor, dass jeder der hier stellvertretend dargestellten zwei Schalterantriebe 15 schubladenartig in die Antriebseinheit 10 hineinsteckbar und aus der Antriebseinheit 10 herausziehbar ist (siehe Doppelpfeil in Figur 2). Um dieses Hineinstecken und Herausziehen der Schalterantriebe 15 durch den Techniker 9 zu ermöglichen, weist die Antriebseinheit 10 schrankseitig mindestens ein erstes Führungselement 17 zum Zusammenwirken mit mindestens einem zweiten schalterantriebsseitigen zweiten Führungselement 18 auf. Auf konkrete, mögliche Ausführungsformen für die Führung wird anlässlich der Beschreibung zu den Figuren 5 und 6 später noch näher eingegangen.

In der in **Figur 2** dargestellten Antriebseinheit 10 sind jedem Schalterantrieb 15 zwei erste Führungselemente 17 in Form von U-förmigen Profilen zugeordnet, welche einen zwei zweite Führungselemente 18 aufweisenden Grundkörper 19 des Schalterantriebs 15 seitlich geführt aufnehmen und so eine Führungsachse 21 bilden, entlang welcher der Schalterantrieb 15 bewegbar ist. Dabei sind die zweiten Führungselemente 18 voll in den blechernen Grundkörper 19 integriert und durch dessen Längskanten 20 gebildet. Auf der linken Seite der Antriebseinheit 10 ist der Schalterantrieb 15 in einem aus der Antriebseinheit 10 beinahe vollständig herausgezogenen Zustand gezeigt, während der Schalterantrieb 15 rechts davon in einem in die Antriebseinheit 10 vollständig eingeschobenen Zustand (Betriebszustand) gezeigt ist, in welchem der Schalterantrieb 15 mit der beweglichen Welle 16 wirkverbunden ist.

Alle elektrischen Verbindungen zum Elektromotor 22 sowie dessen Überwachung und Steuerung inklusive Leistungsversorgung erfolgt über eine elektrische Schnittstelle 23. Zumindest eine Mehrheit aller elektrischen Verbindungen ist über Steckverbindungen 24 erzielt. Dabei definiert die Ausrichtung der Steckverbindungen 24, von denen in Figur 2 zugunsten der Übersichtlichkeit der Figur lediglich eine mit der Referenzziffer 24 bezeichnet ist, eine Steckachse 25. Die Steckachse 25 erstreckt sich quer zur Führungsachse 21 und definiert die erforderliche Bewegungsrichtung des Bedieners 9 zum elektrischen Kontaktieren oder Dekontaktieren des Schaltantriebes mit Anschlüssen, beispielsweise mit von der Steuereinheit her kommenden Anschlussleitungen.

In eingeschobenem Zustand des Schalterantriebs 15 liegt die elektrische Schnittstelle 23 unterhalb einer fensterartigen Anschlussöffnung 26 der ebenfalls als eigenständiger Schrank ausgebildeten Antriebseinheit 10, so dass der Bediener 9 die elektrische Kontaktierung oder Dekontaktierung der Steckverbindungen bequem vornehmen kann. In Figur 2 ist die Antriebseinheit 10 ohne gangseitige Abdeckung gezeigt, um die Auswechselbarkeit der Schalterantriebe 15 zu illustrieren.

Der Motor 22 ist mit der biegsamen Welle 16 über eine formschlüssige mechanische Kupplung 27 verbunden. Bei Bedarf weist der Schalterantrieb 15 zusätzlich eine oder mehrere Getriebestufen zwischen Motor 22 und Kupplung 27 auf. In der Folge bildet die mechanische Kupplung 27 des Schalterantriebs 15 zusammen mit einem (nicht zeichnerisch dargestellten) Kupplungselement auf der Anschlussseite der biegsamen Welle 16 eine formschlüssige, steckbare Kupplung.

Um eine indirekte Positionserfassung des Schaltelementes 5 des Schalters 4 erfassen zu können, weist der Schalterantrieb 15 Hilfskontakte 28 auf. Da es sich bei einer mechanischen Welle 16 um eine lückenlose mechanische Übertragungskette zwischen Elektromotor 22 und Schaltelement 5 handelt, ist die Positionserfassung so zuverlässig realisierbar.

Um dem Betreiber/Techniker 9 ein Ablesen der Schaltstellung des vom Schalterantrieb angetriebenen Schaltelementes 5 des Schalters 4 besonders bedienerfreundlich zu gestalten, weist der Schalterantrieb 15 eine in integrierte Schaltstellungsanzeige 31 aufweist, mit welcher im Betrieb der Antriebseinheit 10 beziehungsweise der Schaltanlage 1 die Schaltstellung des Schaltelementes 5 ergonomisch ideal dem Ableser dargestellt ist.

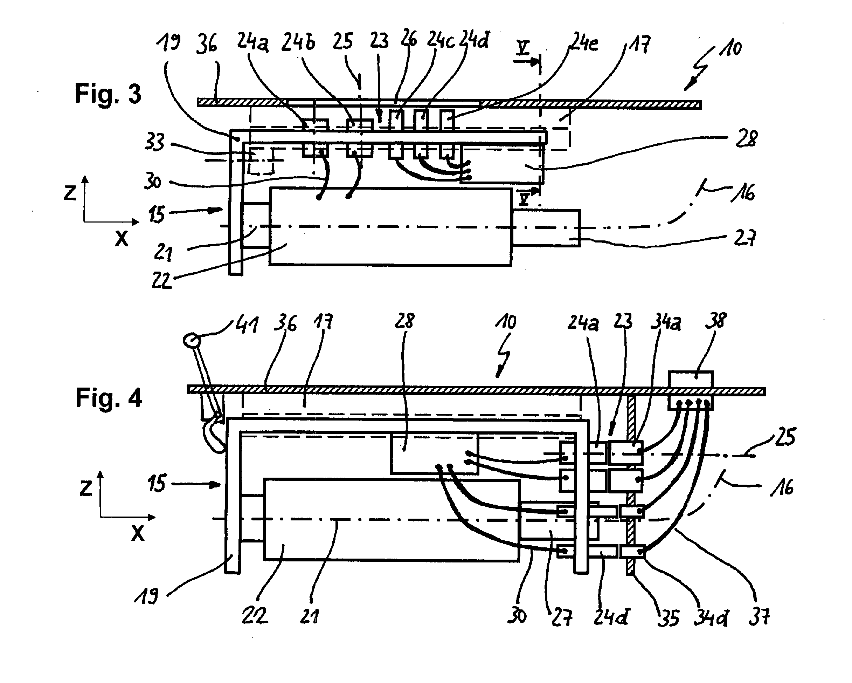

Die **Figur 3** zeigt eine vereinfachte Schnittansicht der vollständig in die Antriebseinheit 10 eingesteckten beziehungsweise eingeschobenen Schalterantriebs 15 einer ersten Ausführungsform quer zu einer ersten Ebene 29 von Figur 2, in Richtung des Doppelpfeils gesehen.

Aus der Figur 3 geht weiter hervor, dass es sich beim Grundkörper 19 um einen gegen den Bediengang 8 hin abgewinkelten Blechkörper handelt. Selbstverständlich kann der Grundkörper je nach Ausführungsform alternativ auch aus mehreren strukturbildenden Elementen zusammengefügt werden oder aber als Gusskörper ausgestaltet sein.

Sowohl der Elektromotor 22, als auch die Hilfskontakte 28 sind fest mit dem Grundkörper 19 des Schalterantriebs 15 verbunden. In dieser Ausführungsform fügt sich die Kupplung 27 an den Elektromotor 22 an. Die an die Kupplung 27 anschliessbare biegsame Welle 16 ist lediglich stilisiert als strichpunktierte Linie dargestellt.

Die elektrische Schnittstelle 23 ist bedienerfreundlich durch die Anschlussöffnung 26 der schrankartigen Antriebseinheit 10 zugänglich und umfasst die als Steckdosen 24a, 24b, 24c, 24d, 24e ausgebildeten Teile der in Richtung der Steckachse 25 ausgerichteten Steckkontaktverbindung. Diese Steckdosen 24a, 24b, 24c, 24d, 24e sind fest mit dem Grundkörper 19 über eine lösbare Schraubverbindung verbunden und über elektrische Leitungen 30 mit dem Motor und/oder den Hilfskontakten 28 verbunden. Nebst den Hilfskontakten 28 können Ausführungsformen des Schalterantriebes 15 je nach Anforderungen noch weitere elektrische Elementen wie beispielsweise Vorwiderstände und/oder Hilfsschalter aufweisen. Die zu den Steckdosen 24a, 24b, 24c, 24d, 24e passenden Stecker werden durch die Anschlussöffnung 26 hindurchgeführt und sind in Figur 3 nicht gezeigt. Die in Figur 3 gezeigte Ausführungsform des Schalterantriebes 15 ist zur sicheren Befestigung über eine weitere Schraubverbindung 33 fest mit der mechanischen Struktur der Antriebseinheit 10 verbindbar und/oder verriegelbar.

Die in **Figur 4** gezeigte alternative zweite Ausführungsform des Schalterantriebes 15 ist in gleicher Darstellung wie in Figur 3 dargestellt um die Unterschiede klarer zu illustrieren. Aufgrund der Ähnlichkeit der zweiten Ausführungsform des Schalterantriebes 15 zur in Figur 3 gezeigten ersten Ausführungsform des Schalterantriebes 15 wird nachfolgend nur auf die Unterschiede der zweiten Ausführungsform des Schalterantriebes 15 bezüglich der ersten Ausführungsform näher eingegangen. Entsprechend sind denn gleiche oder gleich wirkende Teile auch mit identischen Bezugszeichen versehen.

Im Unterschied zur Figur 3 weist der Grundkörper 19 der zweiten Ausführungsform des Schalterantriebes 15 in Y-Richtung gesehen einen U-förmigen Querschnitt auf. Die Steckdosen 24a, 24b, 24c, 24d der elektrischen Schnittstelle 23 sind an einem dem Bediengang 8 abgewandten Ende des Grundkörpers 19 auf einer Aussenseite des hinteren Profilschenkels des Grundkörpers 19 angeordnet und definieren eine Steckachse 25, welche sich in derselben Richtung erstreckt, wie die durch die Führungselemente 17, 18 definierte Führungsachse 21.

Um beim Einschieben des Schalterantriebes 15 in die Antriebseinheit 10 ein selbsttätiges elektrisches Kontaktieren der Steckdosen 24a, 24b, 24c, 24d mit entsprechenden Steckern 34a, 34b, 34c, 34c zu erreichen, sind die Stecker 34a, 34b, 34c, 34c über eine starre Verbindungsgeometrie in Form einer Abstützung 35 fest mit der mechanischen Struktur der Antriebseinheit 10, beziehungsweise deren Deckblech 36 fest verbunden. Die Stecker 34a, 34b, 34c, 34c sind ihrerseits über Anschlussleitungen 37 mit weiteren Steckkontakten 38 verbunden, welche von oberhalb des Deckblechs 36 vom Bediener an vom Steuerschrank her kommenden Anschlussleitungen anschliessbar sind. Die weiteren Steckkontakte 38 sind gleich beschaffen, wie die Steckdosen 24a, 24b, 24c, 24d.

Der Schalterantrieb 15 ist über einen antriebseinheitsseitig angeordneten Kniehebelspanner 41 fest und zuverlässig in seiner vollständig eingefahrenen Position in Richtung der Führungsachse 21 gehalten.

Anhand **Figur 5** wird das Zusammenwirken des ersten Führungselements 17 mit dem zweiten Führungselement 18 gezeigt. Die Figur 5 zeigt eine erste Ausführungsform einer Führung in vereinfachter Schnittansicht entlang einer in Figur 3 mit Schnitt V-V gekennzeichneten Ebene. Das erste Führungselement 17 umfasst zwei erste Führungsprofile 39 aus stranggepresstem Leichtmetall. Jedes Führungsprofil 39 hat einen schlitzförmigen Aufnahmebereich 40, in welchem die das zweite Führungselement 18 bildenden Längskanten 20 des Grundkörpers 19 in YZ-Richtung geführt sind und lediglich ein Hineinschieben und Herausziehen des einen rechteckförmigen Querschnitt aufweisenden Grundkörpers 19 in der sich in X-Richtung erstreckenden Führungsachse 21 erlauben. Ein zwischen dem Grundkörper 19 und dem Deckblech 36 angeordneter Raum ist entsprechend den Platzerfordernissen der Steckdosen 24a,24b,24c,24d,24e dimensioniert.

In derselben Darstellung wie die Figur 5 ist in **Figur 6** eine alternative zweite Führung einer zweiten Ausführungsform mit einem alternativen ersten Führungselement 17 und einem alternativen zweiten Führungselement 18 gezeigt. Aufgrund der Ähnlichkeit der zweiten Ausführungsform der Führung zur in Figur 5 gezeigten ersten Ausführungsform wird nachfolgend nur auf die Unterschiede der zweiten Ausführungsform bezüglich der ersten Ausführungsform näher eingegangen. Entsprechend sind denn gleiche oder gleich wirkende Teile auch mit identischen Bezugszeichen versehen.

Im Unterschied zur Figur 5 weist die zweite Ausführungsform des Grundkörpers 19 einen hutförmigen Querschnitt auf, wobei sich in Y-Richtung je ein Endabschnitt des Grundkörpers 19 erstreckt. Diese Endabschnitte bilden das eigentliche zweite Führungselement 18. Im Unterschied zur ersten Ausführungsform des ersten Führungselements 17 in Figur 5 weist das des ersten Führungselement 17 der zweiten Ausführungsform in YZ-Richtung einen Z-förmigen Querschnitt auf.

### BEZUGSZEICHENLISTE

- 1: Schaltanlage
- 2: Leistungsschalter
- 3: kombinierter Antriebs- und Steuerschrank
- 4: Schalter
- 5: bewegliches Schaltelement
- 6: erster Leiterabschnitt
- 7: zweiter Leiterabschnitt
- 8: Bediengang
- 9: Bediener / Techniker
- 10: Antriebseinheit
- 13: Steuereinheit
- 15: Schalterantrieb
- 16: biegsame mechanische Welle
- 17: erstes Führungselement
- 18: zweites Führungselement
- 19: Grundkörper
- 20: Längskante des Grundkörpers
- 21: Führungsachse
- 22: Elektromotor
- 23: elektrische Schnittstelle
- 24: Steckverbindung
- 24a,24b,24c,24d,24e: Stecker der Steckverbindung
- 25: Steckachse
- 26: Anschlussöffnung
- 27: Mechanische Kupplung
- 28: Hilfskontakte
- 29: Erste Ebene
- 30: Elektrische Leistungen
- 31: Schaltstellungsanzeige
- 33: weitere Schraubverbindung
- 34a,34b,34c,34d: Stecker
- 35: Abstützung
- 36: Deckblech
- 37: Anschlussleitungen
- 38: Weitere Steckkontakte
- 39: Erstes Führungsprofil
- 40: Aufnahmebereich
- 41: Kniehebelspanner

## Patentansprüche

1. Antriebseinheit (10), welche mit mindestens einen Schalter (4) einer Mittel- oder Hochspannungsschaltanlage (1) zum Überführen mindestens eines Schaltelementes (5) des mindestens einen Schalters (4) von einer ersten Position in eine zweite Position verbindbar ist, wobei die Antriebseinheit (10) einen Elektromotor (22) sowie eine elektrische Schnittstelle (23) zur Leistungsversorgung und zur Steuerung des Elektromotors (22) aufweist, **dadurch gekennzeichnet, dass** die Antriebseinheit (10) ein erstes Führungselement (17) aufweist, und dass ein Schalterantrieb (15) den elektrischen Motor (22) und die elektrische Schnittstelle (23) sowie ein zweites Führungselement (18) aufweist, wobei der Schalterantrieb (15) über das zweite Führungselement (18) derart mit dem ersten Führungselement (17) zusammenwirkt, dass der Schalterantrieb (15) in die Antriebseinheit (10) hineinsteckbar und aus der Antriebseinheit (10) herausziehbar ist, und wobei der Schalterantrieb (15) eine mechanische Kupplung (27) zur Abgabe einer über den Elektromotor (22) erzeugbaren Antriebskraft an einen räumlich von der Antriebseinheit (10) entfernt anordenbaren Schalter (4) aufweist.

2. Antriebseinheit gemäss Anspruch 1, **dadurch gekennzeichnet, dass** das erste Führungselement (17) und/oder das zweite Führungselement (18) eine Führungsachse (21) definieren, in deren Richtung der Schalterantrieb (15) in die Antriebseinheit (10) hineinsteckbar und aus der Antriebseinheit (10) herausziehbar ist.

3. Antriebseinheit gemäss Anspruch 1 oder 2, **gekennzeichnet durch** mindestens eines der folgenden Merkmale:
a) dass das zweite Führungselement (18) mit einem Grundkörper (19) des Schalterantriebs (15) verbunden ist;
b) dass der Schalterantrieb (15) mechanische Bedienmittel aufweist, über welche Bedienmittel der Schalterantrieb (15) in einem in die Antriebseinheit (10) eingesteckten Zustand alternativ von Hand betreibbar ist, in Ausführungsformen einem Handkurbelantrieb;
c) dass der Schalterantrieb (15) eine Schaltstellungsanzeige aufweist, mit welcher im Betrieb der Antriebseinheit beziehungsweise der Schaltanlage eine Schaltstellung des Schaltelementes (5) darstellbar ist.

4. Antriebseinheit gemäss Anspruch 3, **dadurch gekennzeichnet, dass** das zweite Führungselement (18) zumindest teilweise in den Grundkörper (19) integriert ist.

5. Antriebseinheit gemäss einem der vorangegangenen Ansprüche, **dadurch gekennzeichnet, dass** die elektrische Schnittstelle (23) als elektrische Steckverbindung (24) mit mindestens einem Stecker und einer Steckdose (24a,24b,24c,24d,24e) ausgeführt ist, wobei der Stecker oder die Steckdose (24a,24b,24c,24d,24e) mit dem Grundkörper (19) verbunden ist.

6. Antriebseinheit gemäss einem der vorangegangenen Ansprüche, **dadurch gekennzeichnet, dass** der Schalterantrieb (15) Hilfskontakte (28) zur Erfassung einer Schalterstellung des Schaltelementes (5) des antreibbaren Schalters (4) aufweist.

7. Antriebseinheit gemäss Anspruch 5 oder 6, **dadurch gekennzeichnet, dass** die Steckverbindung (24) eine Steckachse (25) definiert, welche sich quer zur Führungsachse (21) erstreckt, insbesondere rechtwinklig zur Führungsachse (21) erstreckt.

8. Antriebseinheit gemäss Anspruch 5 oder 6, **dadurch gekennzeichnet, dass** die Steckverbindung (24) eine Steckachse (25) definiert, welche sich derart in Richtung der Führungsachse (21) erstreckt, dass sich beim Hineinstecken des Schalterantriebs in die Antriebseinheit selbsttätig eine elektrische Steckverbindung (24) zwischen Stecker (34a,34b,34c,34d) und Steckdose (24a,24b,24c,24d) einstellt.

9. Antriebseinheit gemäss einem der vorangegangenen Ansprüche, **dadurch gekennzeichnet, dass** der Schalterantrieb (15) im eingesteckten Zustand mit der Antriebseinheit (10) mechanisch verbindbar, in Ausführungsformen mechanisch verriegelbar ist.

10. Schaltanlage, insbesondere gasisolierte Schaltanlage (1), mit mindestens einer Antriebseinheit (10) gemäss einem der vorangegangenen Ansprüche.

## Claims

1. Drive unit (10) which can be connected to at least one switch (4) of a medium- or high-voltage switchgear assembly (1) for moving at least one switching element (5) of the at least one switch (4) from a first position to a second position, wherein the drive unit (10) has an electric motor (22) and an electrical interface (23) for supplying power to and for controlling the electric motor (22), **characterized in that** the drive unit (10) has a first guide element (17), and **in that** a switch drive (15) has the electric motor (22) and the electrical interface (23) and also a second guide element (18), wherein the switch drive (15) interacts with the first guide element (17) by means of the second guide element (18) in such a way that the switch drive (15) can be inserted into the drive unit (10) and can be withdrawn from the drive unit (10), and wherein the switch drive (15) has a mechanical clutch (27) for outputting a drive force, which can be generated by means of the electric motor (22), to a switch (4) which can be arranged spatially remote from the drive unit (10).

2. Drive unit according to Claim 1, **characterized in that** the first guide element (17) and/or the second guide element (18) define/defines a guide axis (21) in the direction of which the switch drive (15) can be inserted into the drive unit (10) and can be withdrawn from the drive unit (10).

3. Drive unit according to Claim 1 or 2, **characterized by** at least one of the following features:
a) that the second guide element (18) is connected to a main body (19) of the switch drive (15);
b) that the switch drive (15) has mechanical operator control means by means of which operator control means the switch drive (15) can, as an alternative, be operated by hand, in embodiments by a hand crank drive, in a state in which it is inserted into the drive unit (10);
c) that the switch drive (15) has a switching position indicator with which a switching position of the switching element (5) can be displayed during operation of the drive unit or of the switchgear assembly.

4. Drive unit according to Claim 3, **characterized in that** the second guide element (18) is integrated at least partially in the main body (19).

5. Drive unit according to one of the preceding claims, **characterized in that** the electrical interface (23) is designed as an electrical plug connection (24) having at least one plug and one plug socket (24a, 24b, 24c, 24d, 24e), wherein the plug or the plug socket (24a, 24b, 24c, 24d, 24e) is connected to the main body (19).

6. Drive unit according to one of the preceding claims, **characterized in that** the switch drive (15) has auxiliary contacts (28) for detecting a switch position of the switching element (5) of the switch (4) which can be driven.

7. Drive unit according to Claim 5 or 6, **characterized in that** the plug connection (24) defines a plug axis (25) which extends transverse to the guide axis (21), in particular extends at a right angle to the guide axis (21).

8. Drive unit according to Claim 5 or 6, **characterized in that** the plug connection (24) defines a plug axis (25) which extends in the direction of the guide axis (21) in such a way that an electrical plug connection (24) between the plug (34a, 34b, 34c, 34d) and the plug socket (24a, 24b, 24c, 24d) is automatically established when the switch drive is inserted into the drive unit.

9. Drive unit according to one of the preceding claims, **characterized in that** the switch drive (15) can be mechanically connected, in embodiments can be mechanically locked, to the drive unit (10) in the inserted state.

10. Switchgear assembly, in particular gas-insulated switchgear assembly (1), having at least one drive unit (10) according to one of the preceding claims.

## Revendications

1. Unité d'entraînement (10), qui peut être reliée à au moins un commutateur (4) d'une installation de commutation de moyenne ou haute tension (1) pour faire passer au moins un élément de commutation (5) dudit au moins un commutateur (4) d'une première position à une deuxième position, dans laquelle l'unité d'entraînement (10) comporte un moteur électrique (22) ainsi qu'une interface électrique (23) pour l'alimentation en puissance et pour la commande du moteur électrique (22), **caractérisée en ce que** l'unité d'entraînement (10) présente un premier élément de guidage (17), et **en ce qu'**un entraînement du commutateur (15) comprend le moteur électrique (22) et l'interface électrique (23), ainsi qu'un deuxième élément de guidage (18), dans laquelle l'entraînement du commutateur (15) coopère avec le premier élément de guidage (17) par l'intermédiaire du deuxième élément de guidage (18) de telle manière que l'entraînement du commutateur (15) puisse être engagé dans l'unité d'entraînement (10) et retiré hors de l'unité d'entraînement (10), et dans laquelle l'entraînement du commutateur (15) présente un couplage mécanique (27) pour envoyer une force d'entraînement pouvant être produite par le moteur électrique (22) à un commutateur (4) pouvant être disposé localement à distance de l'unité d'entraînement (10).

2. Unité d'entraînement selon la revendication 1, **caractérisée en ce que** le premier élément de guidage (17) et/ou le deuxième élément de guidage (18) définissent un axe de guidage (21), dans la direction duquel l'entraînement du commutateur (15) peut être engagé dans l'unité d'entraînement (10) ou retiré hors de l'unité d'entraînement (10).

3. Unité d'entraînement selon la revendication 1 ou 2, **caractérisée par** au moins une des caractéristiques suivantes:
a) le deuxième élément de guidage (18) est assemblé à un corps de base (19) de l'entraînement du commutateur (15);
b) l'entraînement du commutateur (15) présente des moyens de commande mécaniques, moyens de commande à l'aide desquels l'entraînement du commutateur (15) peut, dans un état enfoncé dans l'unité d'entraînement (10), être actionné à la main, ou alternativement dans des formes de réalisation, au moyen d'un entraînement par une manivelle;
c) l'entraînement du commutateur (15) présente un affichage de la position de commutation, avec lequel, pendant le fonctionnement de l'unité d'entraînement ou de l'installation de commutation, une position de commutation de l'élément de commutation (5) peut être représentée.

4. Unité d'entraînement selon la revendication 3, **caractérisée en ce que** le deuxième élément de guidage (18) est au moins partiellement intégré dans le corps de base (19).

5. Unité d'entraînement selon l'une quelconque des revendications précédentes, **caractérisée en ce que** l'interface électrique (23) est réalisée sous la forme d'une connexion électrique (24) avec au moins un connecteur et une prise (24a, 24b, 24c, 24d, 24e), dans laquelle le connecteur ou la prise (24a, 24b, 24c, 24d, 24e) est attaché(e) au corps de base (19).

6. Unité d'entraînement selon l'une quelconque des revendications précédentes, **caractérisée en ce que** l'entraînement du commutateur (15) comporte des contacts auxiliaires (28) pour détecter une position de commutation de l'élément de commutation (5) du commutateur actionnable (4).

7. Unité d'entraînement selon la revendication 5 ou 6, **caractérisée en ce que** la connexion (24) définit un axe de connexion (25) qui s'étend transversalement à l'axe de guidage (21), en particulier perpendiculairement à l'axe de guidage (21).

8. Unité d'entraînement selon la revendication 5 ou 6, **caractérisée en ce que** la connexion (24) définit un axe de connexion (25), qui s'étend en direction de l'axe de guidage (21) d'une manière telle que, lors de l'engagement de l'entraînement du commutateur dans l'unité d'entraînement, il s'établisse automatiquement une connexion électrique (24) entre le connecteur (34a, 34b, 34c, 34d) et la prise (24a, 24b, 24c, 24d).

9. Unité d'entraînement selon l'une quelconque des revendications précédentes, **caractérisée en ce que** l'entraînement du commutateur (15) peut, à l'état enfoncé, être relié mécaniquement, dans certaines formes de réalisation verrouillé mécaniquement, à l'unité d'entraînement (10).

10. Installation de commutation, en particulier installation de commutation isolée au gaz (1), avec au moins une unité d'entraînement (10) selon l'une quelconque des revendications précédentes.
